# EUROPEAN PATENT APPLICATION

(11) **EP 3 584 698 A1**
(43) Date of publication of application: **25.12.2019**
(21) Application number: 18305765.2
(22) Date of filing: 19.06.2018
(51) Int. Cl.: G06F 9/455, G06F 8/41, G06F 9/30, G06F 9/38

(54) **EXECUTION DEVICE FOR INTERMEDIATE CODE**

(71) Applicant: GEMALTO SA, 92190 Meudon (FR)
(72) Inventor: FRANCHI, Christophe, 13881 GEMENOS cedex (FR); LE SAUX, Nicolas, 13881 GEMENOS Cedex (FR); COULON, Jean-Roch, 13881 GEMENOS Cedex (FR); TEISSIER, Sylvere, 13881 GEMENOS Cedex (FR)
(74) Representative: Grevin, Emmanuel

(57) **Abstract**

An execution device including a memory area, a stack and a hardware unit comprising two hardware registers. An ordered sequence of elements comprising bytecodes and operands is stored outside the execution device. The first register has a content set to a targeted element read from the ordered sequence, the memory area includes a series of software components comprising a translation in native language of a predefined set of bytecodes and ending with a specific native instruction requesting to execute the content of the first register. The hardware unit comprises a register manager adapted to automatically do:
(i) each time said first register is read, updating the the first register content with the next element following the targeted element in the ordered sequence and increasing a program counter referencing the next element in the ordered sequence,
(ii) each time said second register is read, updating the second register content with a value located on top of the stack and decreasing a stack pointer referencing the top of the stack,
(iii) each time said second register is written, pushing the content of the second register onto the top of the stack and increasing the stack pointer.

## Description

### (Field of the invention)

The present invention relates to execution devices. It relates particularly to execution devices of intermediate language instructions.

### (Background of the invention)

Intermediate language (generally generated from a code written in a high level language) allows to develop program which are portable across different hardware platforms. Such intermediate languages rely on an interpreter (also called virtual machine) which translate the intermediate language instructions to low level instructions (also called native processor instructions or native instructions) that depends on the targeted hardware platform (i.e. from the processor). Contrary to systems where the program instructions are compiled in a code depending of the hardware platform before the program execution, intermediate language instructions are usually interpreted and translated at the time of the program execution. This lead to performance issue since the needed time can be long.

It is known to speed up the interpreter by a mechanism named JIT for "Just in Time" which results in a JIT compile overhead to create low level instructions. Another alternatively way is to implement the interpreter in full hardware. Unfortunately, such hardware interpreter have a complex and costly design.

There is need to provide an execution device that accelerates execution of software programs written in intermediate language without limitations to be taken into account by application developers.

### (Summary of the Invention)

The invention aims at solving the above mentioned technical problem.

An object of the present invention is an execution device including both a memory area, a stack and a hardware unit comprising first and second hardware registers; an ordered sequence of elements being stored outside the execution device. The elements comprise bytecodes and operands. The first register has a content set to a targeted element read from the ordered sequence. The memory area includes a series of software components comprising a translation in native language for each bytecode of a predefined set of bytecodes. Each of said software components ends with a specific native instruction that requests to interpret and execute the content of the first register using said series. The hardware unit comprises a register manager adapted to automatically perform the following operations:
(i) each time said first register is read, updating the content of the first register with the next element following the targeted element in the ordered sequence and increasing a program counter referencing the next element in the ordered sequence,
(ii) each time said second register is read, updating the second register content with a value located on top of the stack and decreasing a stack pointer referencing the top of the stack,
(iii) each time said second register is written, pushing the content of the second register onto the top of the stack and increasing said stack pointer.

Advantageously, each time the first register is read, the register manager may be adapted to automatically fetch the previous element preceding the targeted element in the ordered sequence and to check that said previous element is equal to the element previously interpreted.

Advantageously, first boundaries may be allocated to the first register and each time a first preset event occurs, the register manager may be adapted to automatically check that the next element stays in said first boundaries.

Advantageously, said first preset event may be the reading of the first register or any clock cycle.

Advantageously, second boundaries may be allocated to the second register and, each time a second preset event occurs, the register manager may be adapted to automatically check that the top of the stack stays in the second boundaries.

Advantageously, said second preset event may be the reading or writing of the second register or any clock cycle.

Advantageously, all software components of the series may have a fixed predefined size.

Advantageously, the series may include an additional software component comprising a jump to a set of instructions stored outside the series, said set of instructions ending with a return instruction.

Advantageously, the bytecodes may be Java™ bytecodes, Davilk™ instructions or intermediate language instructions.

Advantageously, at least one of said translation may comprise an instruction requesting to interpret the content of the first register.

Another object of the present invention is a system comprising the execution device of the invention and an ordered sequence.

Advantageously the system may be a chip, a system-on-a-chip, a computer machine, a phone, a secure element or a Machine-To-Machine module.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts a schematic and block diagram representation illustrating an example system comprising an execution device according to an embodiment of the invention;
- Figure 2A depicts schematically a first example of the state of components belonging to the execution device during execution of a program written in intermediate language,

- Figure 2B depicts schematically a second example of the state of components belonging to the execution device after reading the first hardware register,
- Figure 2C depicts schematically a third example of the state of components belonging to the execution device after writing the second hardware register, and
- Figure 2D depicts schematically a third example of the state of components belonging to the execution device after reading the second hardware register.

### (Detailed description of the preferred embodiments)

The invention may apply to any types of electronic system comprising a hardware unit and a memory area.

The invention provides a new design of a virtual machine intended to execute a program written in an intermediate language.

In this document native instruction means an instruction native to the underlying CPU/processor. A native instruction depends on a targeted CPU while an intermediate language instruction is independent of the CPU.

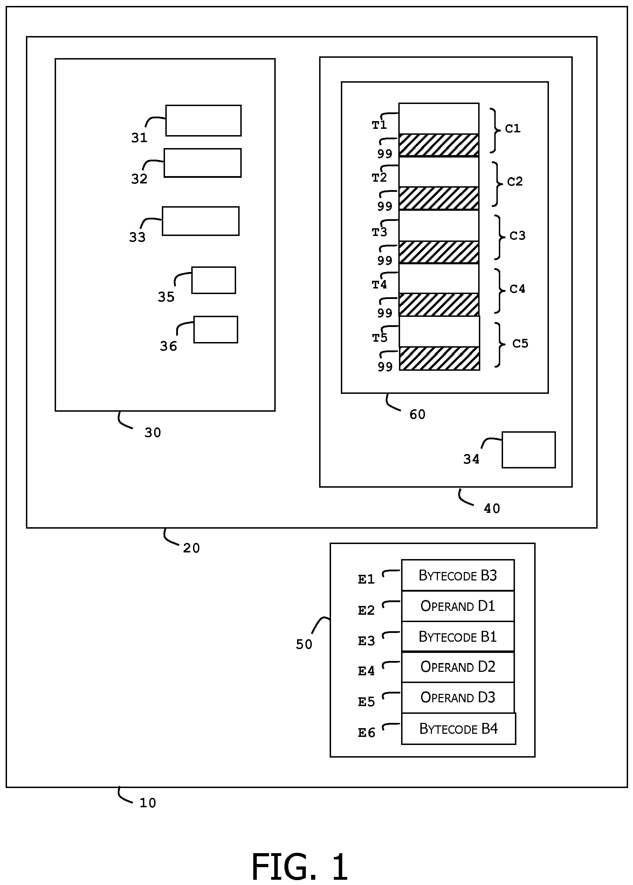

**Figure 1** shows schematically an example of a system 10 comprising an execution device 20 according to an embodiment of the invention.

The execution device 20 comprises both a memory area 40 and a hardware unit 30. The hardware unit 30 comprises a first hardware register 31 and a second, hardware register 32, a register manager 33, a program counter 35 and a stack pointer 36.

A program is assumed to have been developed in high level language like Java™ and then converted in intermediate code like Java™ bytecode. This converted program is an ordered sequence 50 of elements E1, ..., E6 which are stored outside the execution device as such. These elements typically comprise bytecodes and operands.

In the example of Figure 1, the first element E1 comprises the bytecode B3. The second element E2 comprises the operand D1 to which the bytecode B3 applies. The third element E3 comprises the bytecode B1. The fourth and fifth element E4 and E5 comprise two operands D2 and D3 to which the bytecode B1 applies. The sixth element E6 comprises the bytecode B4.

The content of the first register 31 is intended to be set to a targeted element read from the ordered sequence 50. The targeted element is the element that will be next processed by the execution device 20.

The memory area 40 includes a stack 34 and a series 60 of software components C1, ..., C5 comprising a translation T1, ..., T5 in native language for each bytecode of a predefined set of bytecodes. More precisely, each of the software components comprises the translation of one bytecode of the set. In addition, each software component ends with a specific native instruction 99 that requests to interpret and execute the content of the first register 31 using the series 60.

The register manager 33 is configured to automatically perform the following operations:
i) Each time the first register 31 is read: updating the content of the first register 31 with the next element following the targeted element in the ordered sequence 50 and increasing the program counter 35 referencing the next element in the ordered sequence.
ii) Each time the second register 32 is read: updating the content of the second register 32 with a value located on top of the stack 34 and decreasing the stack pointer 36 referencing the top of the stack.
iii) Each time the second register 32 is written: pushing the content of the second register 32 onto the top of the stack 34 and increasing the stack pointer 36.

It is to be noted that a single instruction (i.e. reading or writing a register) causes the register manager 33 to perform several separate operations.

Typically the set of bytecodes whose translation is provided in the software components of the series 60 covers all bytecodes for a given intermediate language. For instance the set may cover all Java™ bytecodes.

Advantageously, some of the translations (e.g. T1 to T5) may contain an instruction requesting to interpret the content of the first register 31. In other words, a translation may contain a call to read the first register 31. Such a call allows to handle the operands of the ordered sequence 50. For example, when starting execution of the ordered sequence 50, the bytecode B3 (corresponding to the first element E1 of the ordered sequence 50) is read through the first register 31 and triggers execution of the native instructions of the translation T3. The bytecode B3 is assumed to manage only one operand, thus its corresponding translation T3 comprises a native call to read the first register 31. When executing this native call, the operand D1 (comprised in the second element E2) is provided to the execution device so that the translation T3 can take the operand D1 into account. The last instruction of the software component C3 is the specific native instruction 99 with is a call for reading the first register 31. Thus it triggers the interpretation and execution of the next bytecode (in the ordered sequence 50) which is the bytecode B1 that is stored in the third element E3 of the ordered sequence 50. The first software component C1 is selected and its corresponding translation T1 is executed. Assuming that the bytecode B1 is designed to manage two operands, the corresponding translation T1 comprises two native calls to read the first register 31 so as to retrieve the operands D2 and D3 through the first register 31. Execution continues so on depending on both the ordered sequence 50 and the content of the software components.

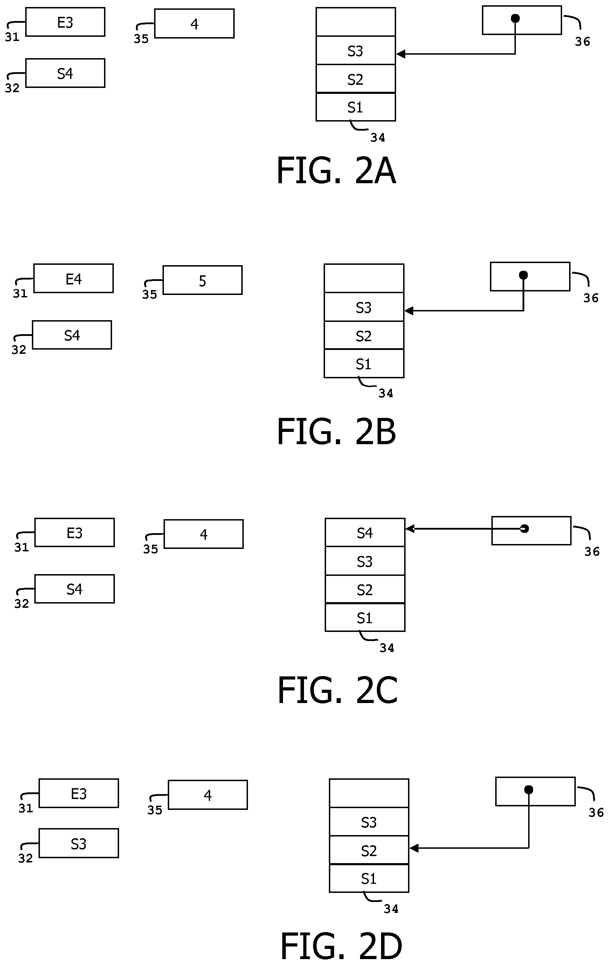

**Figure 2A** shows schematically a first example of the state of components belonging to the execution device 20 during execution of the converted program (i.e. ordered sequence) 50 written in intermediate language.

The execution of the converted program 50 is assumed to be in progress.

At this stage, the first register 31 contains the content of the third element E3 of the ordered sequence 50. In practice, the first register 31 contains the value of the bytecode B1. The program counter 35 contains the value 4 which corresponds to the number of the next element to be treated in the ordered sequence 50. In other words, the program counter 35 references the next element (i.e. E4) to be treated in intermediate code.

The stack 34 stores three items S1 to S3 and the stack pointer 36 references the top of the stack. In the example of Figure 1, the stack pointer 36 references the item S3.

**Figure 2B** shows schematically a second example of the state of components belonging to the execution device 20 after reading the first hardware register 31.

Starting from the state described at Figure 2A, a request to read the first register 31 occurred and triggered the register manager 33 which has automatically updated the content of the first register 31 with the content of the next element (E4) that follows - in the ordered sequence 50 - the element (E3) whose content was previously stored in the first register 31. The register manager 33 also automatically increased the program counter 35 with an increment of 1. The program counter 35 is now set to 5.

The second register 32, the stack 34 and the stack pointer 36 remain unchanged.

**Figure 2C** shows schematically a second example of the state of components belonging to the execution device 20 after writing the second hardware register 32.

Starting from the state described at Figure 2A, a request to write the second register 32 occurred and triggered the register manager 33 which has automatically pushed the content of the second register 32 onto the top of the stack 34 and automatically updated the stack pointer 36 accordingly. Thus the stack pointer 36 has been increased to reference the value newly (i.e. S4) stored at the top of the stack.

The first register 31 and the program counter 35 remain unchanged.

**Figure 2D** shows schematically a second example of the state of components belonging to the execution device 20 after reading the second hardware register 32.

Starting from the state described at Figure 2A, a request to read the second register 32 occurred and triggered the register manager 33 which has automatically updated the content of the second register 32 the value (i.e. S3) located on top of the stack 34 and automatically updated the stack pointer 36 accordingly. Thus the stack pointer 36 has been decreased to reference the value (i.e. S2) currently stored at the top of the stack.

The first register 31 and the program counter 35 remain unchanged.

One of the role of the stack is to store data which are produced by the interpretation/execution of the bytecodes. For example when two data must be added, the value of each data is stored in the stack then the result of the addition is put in the stack.

In a preferred embodiment, all software components of the series 60 have a fixed predefined size. For example their size may be set to 8, 16 or 24 bytes. The series 60 may be stored in table of 255 entries having a sized fixed to 16 bytes for instance. Thus the start address of a targeted software component can be computed in a simple way according to the order of the targeted software component. Thanks to this embodiment, the location of the next bytecode translation can by computed by a simple arithmetic computation, the hardware bus traffic is reduced and hardware caches stress is reduced.

In one embodiment, the series 60 can include at least one software component which comprises a jump to a set of instructions stored outside the series. In such a case, this set of instructions ends with a return instruction so that execution of the software component ends with the specific native instruction 99. This embodiment allows to manage bytecode translations that do not fit with a fixed predefined size or which are particularly complex.

The execution device of the invention can apply to many types of intermediate language like Java™ bytecodes, JavaCard™ bytecodes or Davilk™ instructions.

In one embodiment, each time the first register 31 is read, the register manager 33 is configured to both automatically fetch (i.e. read) the previous element that precedes the targeted element in the ordered sequence 50 and to check that this previous element is equal to the element previously interpreted. For example, starting from the Figure 2A, when a request to read the first register 31 occurs, the register manager 33 read the element E2 from the ordered sequence 50 and checks the element which has just been interpreted is the element E2. This checking allows to verify that the element which has just been interpreted is genuine. This checking allows to detect a possible attack that managed to change the value of an element interpreted by the execution device 20. Since the register manager is implemented in hardware, this security checking can be done within a single clock cycle without performance penalty.

In another embodiment, boundaries may be allocated to the first register 31. Such boundaries may be set as a range of memory addresses for instance. Each time a preset event occurs, the register manager 33 can be configured to automatically check that the next element to interpret stays in the boundaries allocated to the first register 31. If the next element is stored at an address which does not comply with the boundaries, a relevant action can be taken (e.g. error message, log of the attack attempt or stop running the execution device). An advantage of this embodiment is to detect an attack attempt aiming at interpreting data stored outside the genuine ordered sequence or to reroute bytecode execution.

The preset event can be the reading (or receipt of a request to read the first register 31) of the first register 31. The register manager 33 can be configured to automatically check the compliance with the boundaries at each clock cycle.

In another embodiment, memory boundaries can be allocated to the second register 32. Each time a preset event occurs, the register manager 33 can be adapted to automatically check that the top of the stack 34 stays in the memory boundaries. If the top of the stack 34 is not located in the boundaries, a security action can be performed. An advantage of this embodiment is to detect an attack attempt aiming at overflowing the memory range initially planned for the stack.

The preset event can be the receipt of a request to read or write the second register 32. The register manager 33 can be configured to automatically check the compliance with the memory boundaries at each clock cycle.

The invention is not restricted to a set of five bytecode translations and may apply to any set of intermediate language instructions.

The invention does not impose a design constraint for developing applications in high level language and allows to use existing converters that generate intermediate languages. Programs already developed in intermediate language can be run by the execution device of the invention.

Contrary to fully hardcoded virtual machine, the execution device of the invention relies in part on a series of software components which can be upgraded easily compared to hardware components. Thus a bytecode translation in native instructions can be updated and a new bytecode translation can be added to the series.

The execution device of the invention may be embedded in any electronic system like a chip, a system-on-a-chip, a computer machine, a phone, a secure element or a Machine-To-Machine module.

It must be understood, within the scope of the invention, that the above-described embodiments are provided as non-limitative examples. The invention is not limited to the described embodiments or examples. In particular, the features described in the presented embodiments and examples may be combined.

## Claims

1. An execution device (20) including both a memory area (40), a stack (34) and a hardware unit (30) comprising first and second hardware registers (31, 32); an ordered sequence (50) of elements (E1, ..., E6) being stored outside the execution device, said elements comprising bytecodes and operands,
**characterized in that** said first register has a content set to a targeted element read from the ordered sequence (50), **in that** the memory area (40) includes a series (60) of software components (C1, ..., C5) comprising a translation (T1, ..., T5) in native language for each bytecode of a predefined set of bytecodes, **in that** each of said software components ends with a specific native instruction (99) requesting to interpret and execute the content of the first register using said series and **in that** the hardware unit comprises a register manager (33) adapted to automatically perform the following operations:
(i) each time said first register (31) is read, updating the content of the first register with the next element following the targeted element in the ordered sequence (50) and increasing a program counter (35) referencing the next element in the ordered sequence,
(ii) each time said second register (32) is read, updating the second register content with a value located on top of the stack and decreasing a stack pointer (36) referencing the top of the stack,
(iii) each time said second register (32) is written, pushing the content of the second register onto the top of the stack and increasing said stack pointer.

2. The execution device according to claim 1, wherein each time the first register is read, the register manager (33) is adapted to automatically fetch the previous element preceding the targeted element in the ordered sequence (50) and to check that said previous element is equal to the element previously interpreted.

3. The execution device according to claim 1, wherein first boundaries are allocated to the first register (31) and wherein each time a first preset event occurs, the register manager (33) is adapted to automatically check that the next element stays in said first boundaries.

4. The execution device according to claim 3, wherein said first preset event is the reading of the first register or any clock cycle.

5. The execution device according to claim 1, wherein second boundaries are allocated to the second register (32) and wherein, each time a second preset event occurs, the register manager (33) is adapted to automatically check that the top of the stack stays in said second boundaries.

6. The execution device according to claim 5, wherein said second preset event is the reading or writing of the second register or any clock cycle.

7. The execution device according to claim 1, wherein all software components of the series (60) have a fixed predefined size.

8. The execution device according to claim 1, wherein the series (60) includes an additional software component comprising a jump to a set of instructions stored outside the series, said set of instructions ending with a return instruction.

9. The execution device according to claim 1, wherein the bytecodes are Java™ bytecodes, Davilk™ instructions or intermediate language instructions.

10. The execution device according to claim 1, wherein at least one of said translation (T1, ..., T5) comprises an instruction requesting to interpret the content of the first register.

11. A system (10) comprising the execution device (20) and the ordered sequence (50) of claim 1.

12. The system according to claim 11, wherein the system is a chip or a system-on-a-chip.

13. The system according to claim 11, wherein the system is a computer machine, a phone, a secure element or a Machine-To-Machine module.
